# EUROPEAN PATENT APPLICATION

(11) **EP 1 637 043 A1**
(43) Date of publication of application: **22.03.2006**
(21) Application number: 04405592.9
(22) Date of filing: 17.09.2004
(51) Int. Cl.: A23L 1/29, A23C 9/20, A61K 35/20

(54) **Human milk fortifiers and methods for their production**

(71) Applicant: Medela Holding AG, 6340 Baar (CH)
(72) Inventor: Hartmann, Peter, Edwin, Gooseberry Hill, WA 6076 (AU); Lai, Ching, Tat, Canning Vale, WA 6155 (AU); Sherriff, Jilian, Lois, Crawley, WA 6009 (AU); Simmer, Karen, Norrie, Claremont, WA 6010 (AU); Lewis, Michelle, Anne, Atwell, WA 6164 (AU); Mitoulas, Leon, Robert, Osborne Park, WA 6017 (AU); Davis, Bronwyn, Estelle, Duncraig, WA 6023 (AU)
(74) Representative: Bremi, Tobias Hans

(57) **Abstract**

The present invention relates to a human milk fortifier as well as to several uses and a method for the production of such a fortifier. A particularly beneficial fortifier can be realised in that at least one human component based on a product directly or indirectly derived from human mammary secretion during non-pregnant, pregnant, lactating and/or involuting periods is used, giving rise to an optimally adapted fortifying effect which is particularly useful in the context of feeding preterm infants.

## Description

### TECHNICAL FIELD

The present invention relates to a human milk fortifier. It furthermore relates to particular methods of use of such fortifiers as well as to a method for the production of such a fortifiers.

### BACKGROUND OF THE INVENTION

Human milk is commonly recognized as the optimum feeding for infants due to its nutritional composition and immunologic advantages. Furthermore, mature donor human milk is considered a desirable feeding for preterm, low-birth-weight infants in early newborn intensive care units. However, mature donor milk was found not to provide sufficient amounts of some nutrients to meet rapidly growing low-birth-weight infant's needs. For these reasons, milk from the premature infant's own mother has become the preferred feeding in the modem newborn intensive care units.

But not only for preterm, low-birth-weight infants mature donor milk does not always supply the appropriate mixture of nutrients and immunological components, under certain conditions also term infants during some stage of their development need additives or supplemental feeding to get the optimum nutritional conditions for ideal growth and best resistance to illnesses etc..

Preterm infants but also term infants are commonly fed either a commercial infant formula designed specifically for these infants or their own mother's milk. Research is still underway regarding the nutritional requirements of preterm infants.

Herewith explicit reference shall be made to a very comprehensive, detailed and general description of the problems and the present status of development in the field of fortifiers for human milk in particular for feeding preterm infants as given in the background portion of US 6,294,206.

Relative to estimates of the infant's requirements, preterm human milk is apparently lacking in several constituents such as calcium, phosphorus and protein. When preterm human milk is fortified with protein and energy, a low-birth-weight infant's growth approaches that occurring in utero. Additionally, when fortified with calcium and phosphorus, there is increase accretion of these minerals and improvement of bone density. Thus, it has been recommended that when preterm infants are fed preterm human milk, the human milk be fortified to better meet the nutritional needs of the preterm infant.

Liquid and powder forms of preterm milk fortifiers have been marketed domestically in response to this recognized need. Commercially available products are for example as a powder Enfamil ® (Mead Johnson Nutritionals, Evansville, Ind.) as well as a liquid Similac Natural Care ® (Ross Products Division of Abbott Laboratories, Chicago, ILL.). They not only comprise protein, fat and carbohydrates, but also substantial amounts of minerals as well as vitamins. The sources of these constituents are for example whey concentrates (protein), soy or coconut (fat) and corn syrup (carbohydrate), while the minerals and the vitamins are presumably of synthetic origin. The fortifiers differ with respect to their form, source of ingredients and energy and nutrient composition. Generally one can say that powder products are advantageous to minimize the dilution of mother's milk, while if mothers milk supply is limited, a liquid fortifier may be used to complement her supply of human milk.

There is a need for powdered or liquid human milk fortifiers which are well tolerated by preterm as well as term infants, which can be added to human donor milk, and which provide the optimum nutritional conditions for the infant not only with respect to the needed energy but also with respect to any other nutritional element beneficial or essential to the infant.

### SUMMARY OF THE INVENTION

The aim of the present invention is to provide an improved alternative fortifier for human milk as well as particular uses of such a fortifier and a method for the production of such a fortifier.

The proposed improved fortifier comprises at least one human component based on a product directly or indirectly derived from human mammary secretion during non-pregnant, pregnant, lactating and/or involuting periods.

The object of the present invention is therefore a fortifier product according to claim 1, a method of use according to claim 18 and a method for the production according to claim 23.

According to the state-of-the-art, fortifiers in particular in the field of preterm infant nutrition are based either on nonhuman milk, i.e. normally on bovine milk, or on fully synthetic systems or on systems which rely on carbohydrates (in particular lactose), fats and proteins from vegetable sources. Constituents like vitamins and minerals are typically of synthetic origin. However, it is a well-known fact that in particular proteins, carbohydrates, fats but also many other constituents of milk, like antibodies etc. are highly dependent on the species. In particular (but not only) with respect to immunological as well as hormonal considerations it is therefore desirable to keep the milk administered to infants and in particular preterm infants as close as possible to the "natural" system, which of course is human milk of the mother.

However, there are many situations where mammary secretion of the mother is either not available or the particular mammary secretion of the mother does not show the optimum amounts of particular constituents to allow ideal feeding conditions for the baby, so fortifiers can hardly be avoided. The key feature of the invention therefore resides in the surprising finding that optimum nutritional conditions can be made available by providing fortifiers which are at least partially but preferably substantially based on products directly or indirectly derived from human milk. Such fortifiers naturally have the (almost) perfect species-specific composition as well as constituents and can therefore not only promote ideal growth of the infant but can also provide the baby with perfect immunological and hormonal supply. In particular in the case of low-weight-birth, preterm infants these fortifiers proved to be very beneficial. With the advent of increased awareness of the fact that optimum feeding of babies can only be provided by breast-feeding, milk banks have become more popular and therefore the provision of basis material of such fortifiers is not a problem anymore.

It has to be pointed out that within the scope of the term "fortifier" as used in this document, also systems which are "deriched" have to be understood. In other words, it is for example commonly known that many preterm babies have a limited ability to cope with lactose. A fortifier according to the invention may accordingly also be a liquid/dry system, which comprises less (or no) lactose (which correspondingly has been depleted in lactose). Adding such a "fortifier" to the mothers milk will lead to a final milk composition which is much lower in lactose than the composition without the addition of the fortifier. This is not limited to lactose but also to other constituents like protein, fat, etc. which may be reduced or even completely eliminated in the fortifier.

In a first preferred embodiment of the present invention, the proposed fortifier is in dried or liquid form, preferentially selectively concentrated. Preferably it is provided as a powder.

According to another preferred embodiment of the present invention, the fortifier has been directly or indirectly derived from human mammary secretion from the same individual as the human milk to be fortified. This has the particular advantage that a particular mother's milk can be fortified without any components from other sources, thus reducing possible contamination or immunological interferences.

According to another preferred embodiment of the present invention, the human milk, i.e. the human component or fortifier is enriched with respect to the product as originally and naturally derived from the mammary secretion in at least one of its aqueous and/or nonaqueous natural constituents. In other words, the source material for the fortifier is not taken in its natural form and composition, but it is treated such that a particular component like the proteins or even one particular protein is enriched. These enriched constituents or combinations of constituents can be proteins, fats, carbohydrates, vitamins, minerals, homones, enzymes, cytokines, antibodies etc. as present in the human milk. The provision of such specific fortifiers allows the use of particular fortifiers enriched in a certain component or groups of components in a situation where this component or group of components is not available in the mother's milk in a sufficient amount. A whole spectrum of particular fortifiers can therefore be provided which can then be combined for use according to specific individual requirements of the infant concerned (specific needs of the infant) and of the basis human milk as normally provided by the mother (specific deficiencies in the composition of the mother's milk). It is particularly advantageous to provide a fortifier which is enriched in an immunologically (for example antibodies) or hormonally active component. These particular components are extremely species-specific and therefore the provision in the form of fortifiers allows completely new ways of treating and feeding infants and in particular preterm infants.

According to another preferred embodiment of the present invention, the human component is at least partially, or preferably fully pasteurised and/or sterilised. This is to avoid concerns about possible bacterial, viral and other contamination of donor milk and to allow storage.

According to a further preferred embodiment, the fortifier not only comprises the above-mentioned human component based on human donor milk but it furthermore additionally comprises at least one supplemental nonhuman component. The nonhuman component can be for example a nonhuman, preferably bovine milk or milk extract. Alternatively or additionally, it is possible to provide further nonhuman components like proteins, fats, carbohydrates, etc., all of these for example being of vegetable origin. Furthermore is possible to additionally include vitamins, minerals, stabilizers, emulsifiers or the like, which may either be of natural or synthetic origin.

The specific design of the fortifiers can be influenced by a particular choice of the basis material, i.e. of the human milk. It is a well-known fact that human milk varies in composition not only from other species, but also between individual women and even for one individual woman, human milk composition changes depending on whether it is taken at the beginning of an individual feeding or versus the end of the feeding. Additionally there is a diurnal variation, a day-to-day variation, a dependency on the length of gestation, and the composition of human milk depends on the stage of lactation, i.e. it is different from early lactation to later lactation. This fact can be made use of in that depending on the desired fortifier, the basis material (human milk) can be taken from a mother during particular stages of mammary secretion such as: after beginning of individual feeding; versus end of individual feeding; lactation phase. Like this for example colostrum milk, which is very high in protein and antibodies but quite low in lactose and fat can be used without further separation techniques after simple drying to be used as a very specific fortifier. The same is possible by using for example transitional milk (7-21 days postpartum) or mature milk (> 21 days postpartum) to get a particular combination of constituents and to thereby make specific fortifiers available without further treatment like enrichment etc..

The above-mentioned fortifiers can be used for providing supplemental nutrients to infants. This can be done by adding a fortifier as mentioned above to liquid (human but also bovine or milk substitutes based on commercial infant milk formulae) milk (preferably the infant's own mother's milk) and administering such fortified human milk to an infant. Such uses are particularly beneficial in the case of the nutrition of a premature low-birth-weight infant. Typically under these conditions, such a fortifier is added in amounts between 0-200 mg, preferentially 0-50 mg, per ml human milk. As a matter of fact, the level of fortification depends on various parameters, such as gestational age, the weight of the infant, the health status of the mother and/or of the infant etc.. Current practice on fortification is based on total calories, like for example 20 calories or 24 calories per 30 millilitres.

In the case of a fortifier from human milk, be it of the own mother or of a donor mother, using the average marco- nutrient of human milk (3.8g/100ml of fat, 1g/100ml of protein, 7.0g/100ml of lactose, 20Cal/30ml of energy), the recommended level for protein is 2.5g/kg/day, the baby's weight is 1kg and the fluid intake is 100ml/kg/day. Then 1.5g of dry protein fortifier from human milk is e.g. needed to be added to 100ml of human milk.

Analogous considerations are appropriate if liquid concentrates are used as fortifiers.

If the mother's milk has on one day a volume of 300 ml and comprises 18.5 g lactose (74 cal), 2.4 g protein (9.6 cal) and 10.8 g fat (97 cal), then the total calories intake of the baby for this day is 180.6 cal or 18.6 cal/oz. The mother can then decide if this is sufficient for the baby or not. She can add fortifiers, enrich or derich the milk or feed it unchanged.

The own mother's milk can be tailored to fulfil the infants requirements. Different products can be obtained such as protein enriched milk, lactose free milk, sIgA rich milk.

For a preterm baby, the recommended protein level is for example 2.5 g protein/kg/day, the recommended volume is <180 ml/kg/day and the recommended calories are 24cal/oz. This means for a preterm baby of 1.730 kg a protein level of 4.3 g/day and a volume of 294 (300) ml per day.

If for example there is no mother's milk available, it is also possible to use said fortifiers for improving milk substitutes. Correspondingly, a further method is proposed of providing supplemental nutrients to infants, preferably a premature infant, comprising adding a fortifier to liquid bovine milk and/or to a commercial infant milk formula and administering such fortified milk to an infant. It is also conceivable that fortifiers are produced based on human milk of a mother when she has excess amounts of milk available, to store them appropriately, and to use these fortifiers in situations, where the mother herself is not able to produce sufficient amounts of milk (or milk with appropriate composition) and to then use these fortifiers.

The present invention furthermore relates to a method for the production of a fortifier as mentioned above, wherein a product directly or indirectly derived from mammary secretion during non-pregnant, pregnant, lactating and/or involuting periods is at least partially separated in individual aqueous and/or nonaqueous components or groups of aqueous and/or nonaqueous components. The separation of nonaqueous parts is preferably carried out either prior to or after the removal of the aqueous and/or nonaqueous part of the mammary secretion. To eliminate concerns about possible bacterial, viral or other contaminations, it may be advisable to include at least one sterilisation step. Possible separation steps include methods such as freezing, drying, centrifugation, filtration, chelation, membrane separation, ultrafiltration, reverse osmosis, affinity column separation, dialysis, or combinations thereof.

Not only the use of the proposed fortifier for infants can be interesting, but also uses for adults may open completely new fields. Therefore according to another preferred embodiment a method of providing supplemental nutrients or supplemental immunologically active components to an adult is proposed, comprising administering a fortifier as outlined above in dried or liquid form.

Further embodiments of the present invention are outlined in the dependent claims.

### SHORT DESCRIPTION OF THE FIGURES

In the accompanying drawings preferred embodiments of the invention are shown in which:
- Figure 1: is a setup for the separation or concentration of constituents using a filter unit;
- Figure 2: shows the total protein content before (solid dots) and after (circles) pasteurization as a function of time of ultrafiltration;
- Figure 3: as in figure 2, but the calcium content is shown as a function of time of ultrafiltration;
- Figure 4: as in figure 2, but the lactose content is shown as a function of time of ultrafiltration;
- Figure 5: as in figure 2, protein content as a function of time of ultrafiltration , long run of 9h;
- Figures 6 to 9: show the results of an analysis of mother's milk as a function of time (days postpartum), wherein

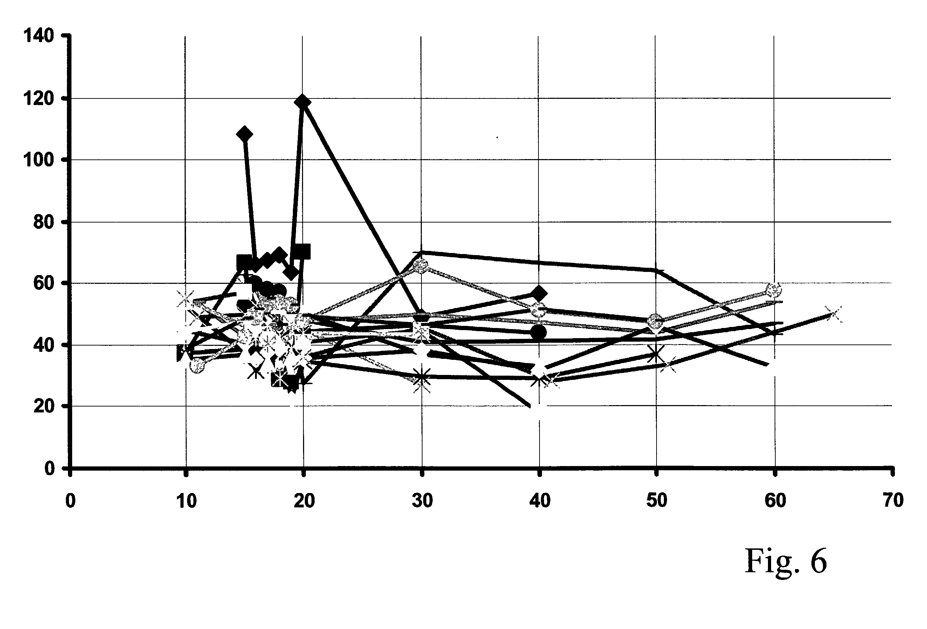

- Figure 6: shows an average fat content of mother's milk from day 10 to 60 postpartum for different mothers;

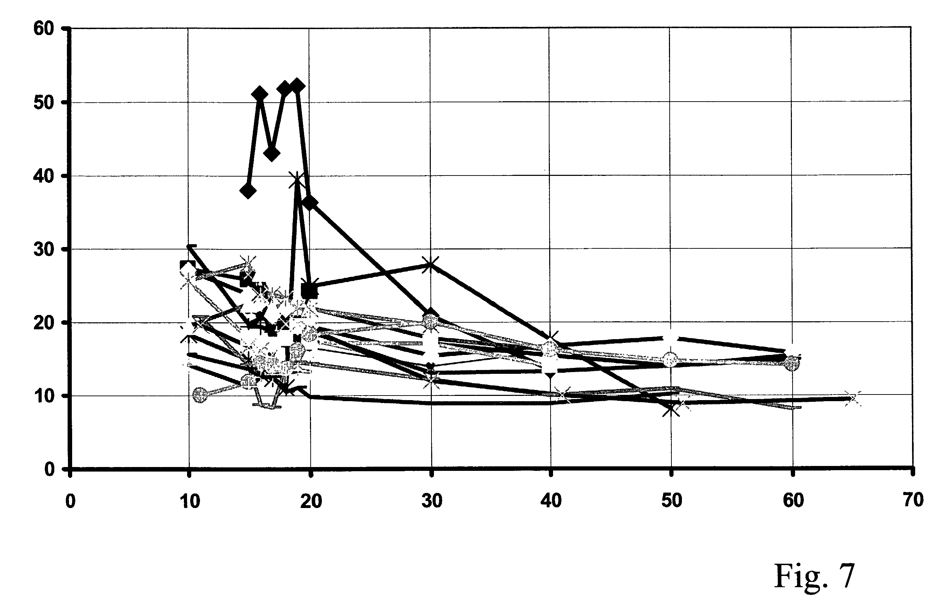

- Figure 7: shows an average protein content of mother's milk from day 10 to 60 postpartum for different mothers;

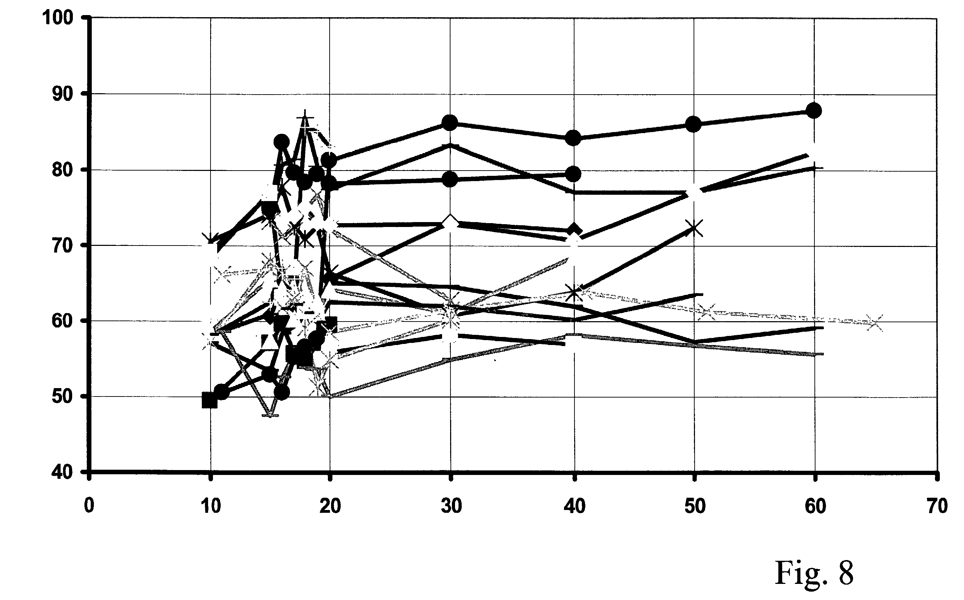

- Figure 8: shows an average lactose content of mother's milk from day 10 to 60 postpartum for different mothers; and

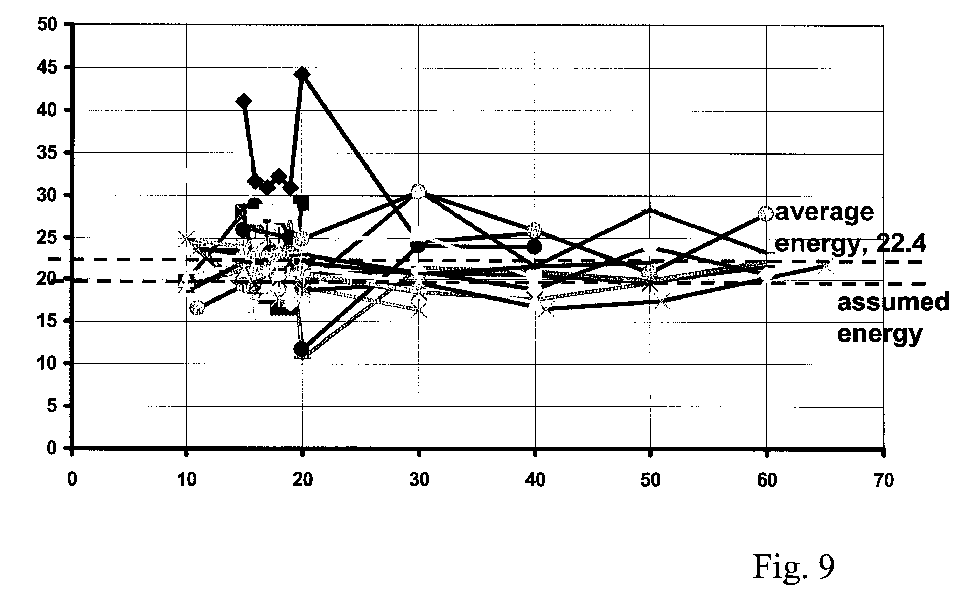

- Figure 9: shows an average energy content of mother's milk from day 10 to 60 postpartum for different mothers.

### DETAILED DESCRIPTION OF THE PREFERRED EMBODIMENTS

Without limiting the scope of the present invention as claimed in the appended claims, the preparation as well as uses of fortifiers based on human memory secretion shall be illustrated by means of several examples given below.

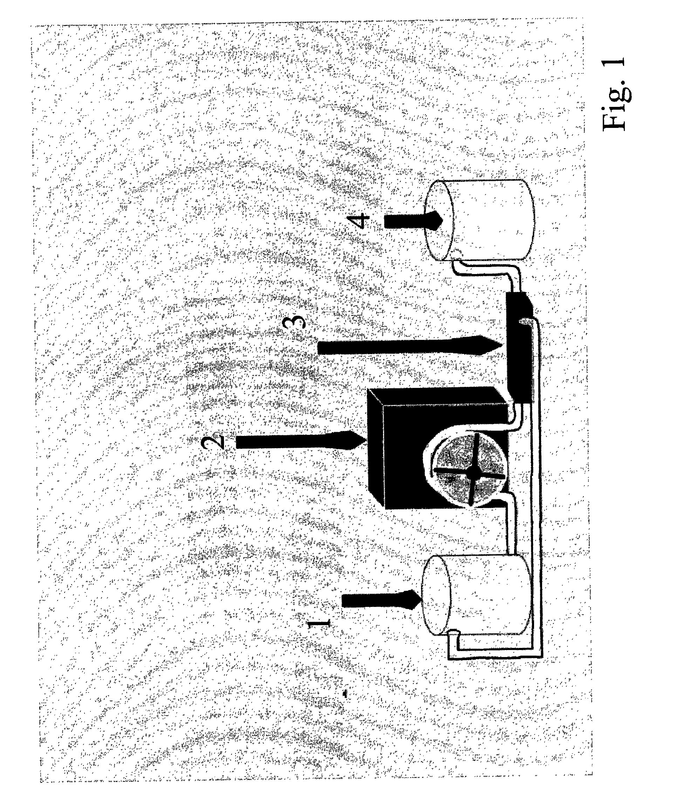

In figure 1 a setup is shown for the separation or the concentration of constituents by using a filter element. To this end, the sample 1 is connected to a filter unit 3, which on the one hand allows to pass filtrate 4 to one container and the supernatant to flow back to the sample/concentrate container 1 wherein circulation is forced by means of a pump 2.

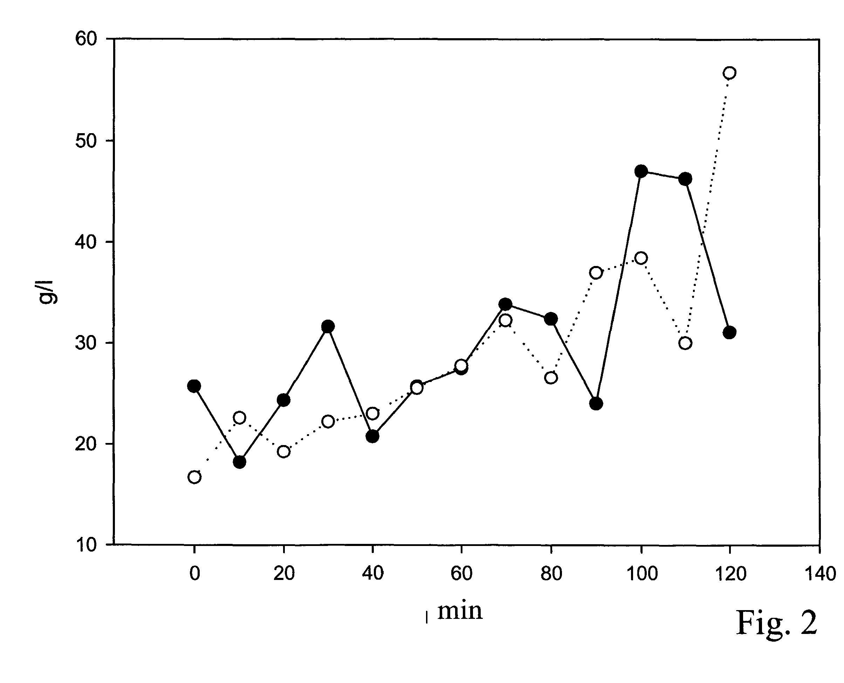

Using such a setup with a filter (membrane, eg 30kD) that holds back large elements like proteins and constituents bound to such large elements as for example calcium (which is bound to casein, a large protein), while allowing to pass small molecules like water, lactose and the like, and as an option using a pasteurization step (60° C, 30 minutes), the results as outlined in figures 2-5 are observed.

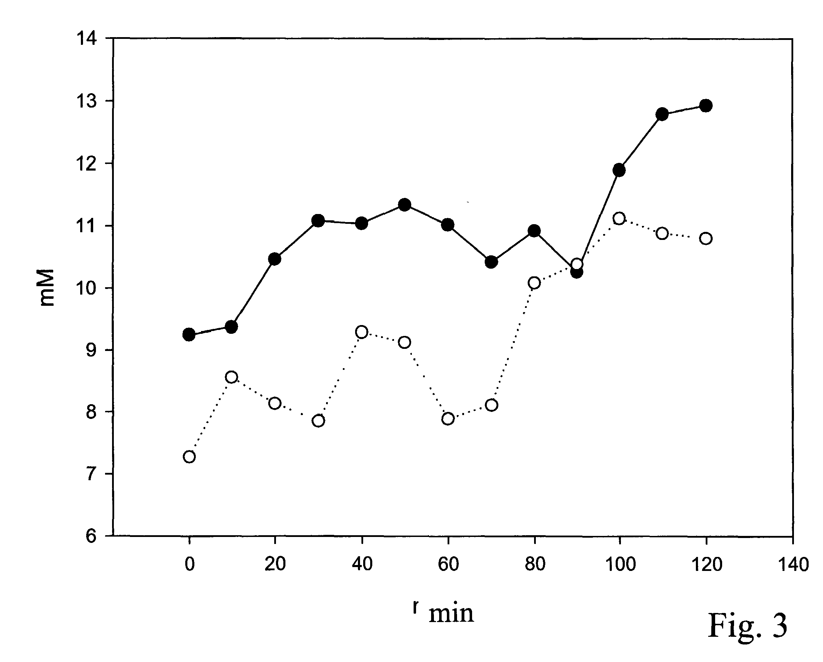

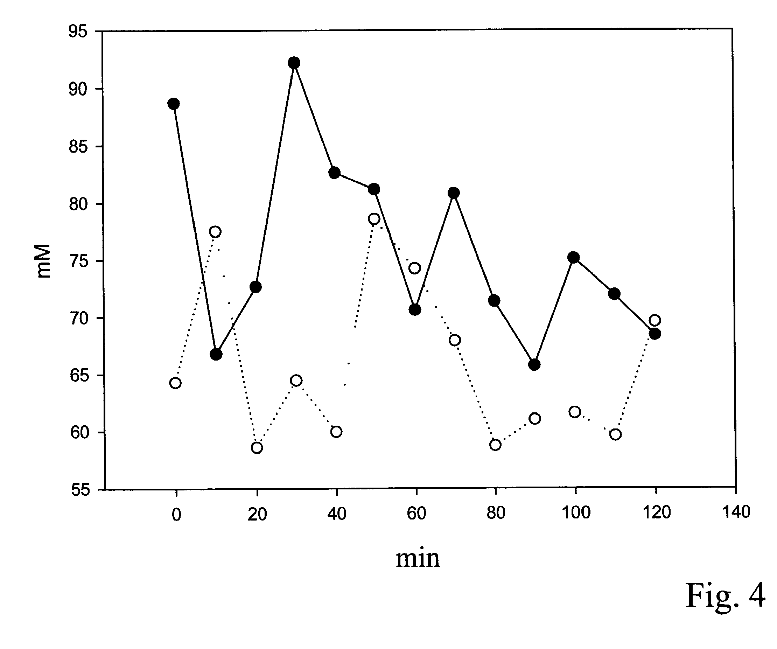

As shown in figure 2, indeed the total protein content in the concentrate can be increased by about a factor of 2. As can be seen in figure 3, the calcium is also enriched in the concentrate fraction, as it is bound to a protein. Lactose on the other hand, as can be seen in figure 4, is kept in a quasi-equilibrium across the membrane.

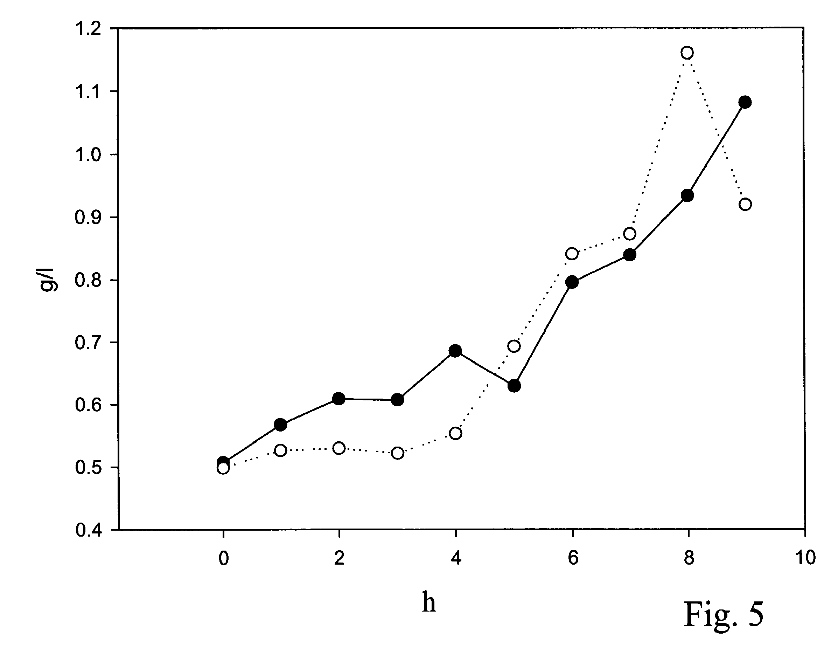

Figure 5 shows a long run result of the protein content and indeed, after a nine hours run a tenfold increase in protein content could be obtained, i.e. the volume could be reduced from 500 to 50 millilitres.

With on the one hand using centrifugation for the separation of the fat part and on the other hand the above described ultrafiltration of the protein or rather large molecular parts of the milk, the results as outlined in table 1 can be obtained :

**Table 1**

| | | | Enrichment | |
|---|---|---|---|---|
| | g/150ml | Centrifuge, g/150ml | Centrifuge, g/6.7ml | Ultrafiltration, g/30ml |
| Fat | 6 | 0 | 6 | 0 |
| Lactose | 9 | 9 | 0 | 9 |
| Protein | 1.5 | 1.5 | 0 | 1.5 |
| Energy, Cal/oz | 19.2 | 8.4 | 10.8 | 8.4 |

Figures 6 to 9 show the results of an analysis of mother's milk as a function of time (days postpartum, 17 mothers). It can be recognised that in particular during the first few days, there is a large variation in almost all of the constituents. In particular during these stages fortification may be appropriate. Also, as indicated in figure 9, in the energy content there is greater variation at the early days of lactation (>20 days) then the energy content becomes more balanced. From these 17 mothers, the average energy is 22.4 Cal/oz. So one can use the current assumption of energy content in human milk, ie 20 Cal/oz., and foritify mother's own milk. In particular in the early days of lactation, some may have over or under supplemented milk which could lead to unnecessary complication.

### Example 1

A liquid sample of human milk sample (100ml) was taken. The human milk was taken either from a mother of a preterm baby or from a human milk donor at >10 days and <90 days, respectively, after birth. The milk sample was taken from milk that had been expressed from the breast over the course of a day. The principal composition of this milk can be summarised as follows: 3.8% fat, 0.8% protein and 5.2% carbohydrate. The actual energy content of the milk sample was determined. The non-aqueous (cream) fraction of the milk was separated from the aqueous fraction by centrifugation (10000 rpm, 4° C) and the top layer (the cream) was carefully removed and a known volume was added to 140ml of the mother's own milk to increase the energy content of her milk to the recommended level for a preterm baby of the particular weight and age.

In addition, there may be a pasteurization and a standard hospital grade of bacteria assessment as standard procedure.

The preterm infant's growth and development could be observed to be similar to the one occurring in utero.

### Example 2

A liquid sample of human milk sample (150ml) was taken. The human milk was taken either from a mother of a special need baby (preterm or sick term baby) or from a human milk donor at >10 days and <90 days, respectively, after birth. The milk sample was taken from milk that had been expressed from the breast over the course of a day. The principal composition of this milk can be summarised as follows: 3.8% fat, 0.8% protein and 5.2% carbohydrate. The concentration of protein in the milk sample was determined. The non-aqueous (cream) fraction of the milk was separated from the aqueous fraction by centrifugation (10000 rpm, 4° C) and the top layer (the cream) was carefully removed. The aqueous layer was then concentrated by passing it through a filter that was impervious to milk proteins (30Kd Omega Ultrafiltration Tangential Flow Filtration membrane, Pall; temperature as cold as possible, in the specific case 19°C). Once the aqueous fraction had been concentrated 5 fold (by passing the liquid through the filter several times for 9 hours to obtain a mean level of protein content that can be concentrated in each hour as an estimate, and by analysing the concentrated protein, i.e. the final product, to obtain the true protein content before using it in the fortification step) a known volume of the concentrated milk protein was added to 130ml of mother's own milk to increase the protein content of the milk to the recommended level for a preterm baby or sick term baby of the particular weight and age.

In addition, there may be a pasteurization and a standard hospital grade of bacteria assessment as standard procedure.

The preterm infant's growth and development could be observed to be similar to the one occurring in utero and the term infant's growth and development could be observed to be similar to that of a term baby of a similar age.

### Example 3

A liquid sample of human milk sample (500ml) was taken. The human milk was taken from a human milk donor at >90 days after birth. The milk sample was taken from milk that had been expressed from the breast over the course of a few days and stored frozen. The principal composition of this milk can be summarised as follows: 3.8% fat, 0.8% protein and 5.2% carbohydrate. The concentration of protein in the milk sample was determined. The non-aqueous (cream) fraction of the milk was separated from the aqueous fraction by centrifugation (10000 rpm, 4°C) and the top layer (the cream) was carefully removed. The aqueous layer was then concentrated by passing it through a filter that was impervious to milk proteins (30Kd Omega Ultrafiltration Tangential Flow Filtration membrane, Pall; temperature as cold as possible, in the specific case 19°C). Once the aqueous fraction had been concentrated 5 fold (as outlined under example 2), the concentrated solution was centrifuged at high speed (210000 rpm, 4°C) to precipitate the casein fraction. The casein fraction, in addition to protein, contains a large proportion of the calcium and phosphorus that is in breastmilk. This fraction was pasteurised (hold method, 60°C for 35minutes; using hospital bacteria assessment negative results were found in all samples that were prepared; Jeffery BS, Soma-Pillay P, Mak (2003) The effect of Pretoria Pasteurization on bacterial contamination of hand-expressed human breastmilk 49(4) 240-4 J Trop Pediatr) and stored frozen either as a liquid or dried powder until required. Measured amounts of this enriched protein/calcium/phosphorus fraction was used to fortify mother's own milk for either preterm or sick term infants to restore their calcium and phosphorus balance.

The preterm infant's growth and development could be observed to be similar to the one occurring in utero and the term infant's growth and development could be observed to be similar to that of a term baby of a similar age.

### Example 4

A liquid sample of human milk sample (1000ml) was taken.. The human milk was taken either from a mother of a preterm baby or from a human milk donor at >10 days and >90 days, respectively, after birth. The milk sample was taken from milk that had been expressed from the breast over the course of a few days and stored frozen. The principal composition of this milk can be summarised as follows: 3.8% fat, 0.8% protein and 5.2% carbohydrate. The concentration of protein in the milk sample was determined. The non-aqueous (cream) fraction of the milk was separated from the aqueous fraction by centrifugation (10000 rpm, 4°C) and the top layer (the cream) was carefully removed. The aqueous layer was then concentrated by passing it through a filter that was impervious to milk proteins (30Kd Omega Ultrafiltration Tangential Flow Filtration membrane, Pall; temperature as cold as possible, in the specific case 19°C). The aqueous fraction was concentrated 5 fold (as outlined under example 2), and then passed through an affinity column (Pharmacia) to separate the sIgA and lysozyme. The sIgA and lysozyme solutions were then pasteurised (hold method as a line under example 3) and stored frozen as a liquid until required. Measured amounts of either the concentrated sIgA or lysozyme solutions were used to fortify the breastmilk of mothers who had low concentrations of either sIgA or lysozyme in their milk.

### Example 5

A liquid sample of human milk (50 mg, 50ml) was taken. The human milk was taken from a mother about 20 days after birth. The sample was taken at the beginning of one particular feeding, i.e. it was rather low in fat. The principal composition of this milk can be summarised as follows: 3.8% fat, 1% protein, 7% carbohydrate, 67% energy The aqueous parts of the sample were allowed to evaporate using a rotary evaporator leading to a dry sediment. This sediment was carefully transformed into a powder avoiding strong grinding. 6.2 mg (based on the fact that 87.6% of milk is water (Jenness et al. (1970) Dairy Sci. Abstr., 32, 599-612). The above procedure removes all water in milk and all the macronutrients remain in dry form) of dry fortifier resulted from this procedure.

This powder was used as a fortifier for human milk derived from a mother of a preterm infant. 6.2mg of the fortifier were added to 50 mg of the milk from the mother and fed to the preterm infant. The preterm infant's growth and development could be observed to be similar to the one occurring in utero.

### Example 6

The fortifier of example 1 was additionally supplemented such as a level of calcium resulted to be 123-185/100kcal, of folic acid to be 30-45µg/100kcal, of riboflavin to be 80-620µg/100kcal, of vitamin B to be 130-250µg/100kcal and of vitamin C to be 8.3-37mg/100kcal. (Klein J.C. (2002) Nutrient Requirements for peterm infant formulas, J. Nutr. 132, 1395s-1577s)

This powder was used as a fortifier for human milk derived from a mother of a preterm infant. 6.2mg of the fortifier were added to 50 mg of the milk from the mother and fed to the preterm infant. The preterm infant's growth could be observed to approach that occurring in utero.

### Example 7

A liquid sample of human milk (50 mg) was taken. The human milk was taken from a mother 1 day after birth. The sample was taken versus the end of one particular feeding, i.e. it was correspondingly rich in fat. The principal composition of this milk can be summarised as follows: 3.8% fat, 1% protein, 7% carbohydrate, 67% energy The aqueous parts of the sample were allowed to evaporate using a rotary evaporator leading to a dry sediment. This sediment was carefully transformed into a powder avoiding strong grinding in a mortar. 6.2 mg of dry fortifier resulted from this procedure. This powder was used as a fortifier for human milk derived from a mother of a preterm infant. 6.2 mg the fortifier were added to 50 mg of the milk from the mother and fed to the preterm infant. The preterm infant's growth and development could be observed to be similar to the one occurring in utero.

In 150ml of mother's own milk (EBM), there is 9.2 g of lactose, 1.2g of protein, 5.44g of fat. After a series of calculation, 11g of cream (or fat) is added into her milk. This concentrated protein from the ultrafiltration is in solution from. In 150ml, there is 3.085g of protein. These are the total amount of macro nutrient in 300ml of the fortified mother's own milk and these the calories from each nutriens, and after conversion, each oz will deliver 24Calories. Using this method, one is now able to obtain a precise procedure to fortify mother's own milk to meet the nutrient and energy content of her preterm without the use of any artificial fortifier, but by only using so called "True human milk fortifiers", i.e. donor mother or same mother based fortifiers. The situation is given in an example in Table 2

**Table 2:**

| | | True human milk fortifiers | | Fortified mother's own milk | |
|---|---|---|---|---|---|
| nutrient | EBM (150ml) | Cream (g) | Concentrate (g/150ml) | 300ml | Cal/300ml |
| lactose | 9.24 | | 9.24 | 18.48 | 73.92 |
| Protein | 1.215 | | 3.085 | 4.3 | 17.2 |
| fat | 5.44 | 11.1 | | 16.5 | 148.6 |

## Claims

1. Human milk fortifier comprising at least one human component based on a product directly or indirectly derived from human mammary secretion during at least one of the following periods: non-pregnant period, pregnant period, lactating period, involuting period.

2. Fortifier according to claim 1, wherein it is in substantially dried or liquid, preferentially selectively concentrated, form.

3. Fortifier according to any of the preceding claims, wherein the fortifier has been directly or indirectly derived from human mammary secretion from the same individual as the human milk to be fortified.

4. Fortifier according to any of the preceding claims, wherein it is in powder form.

5. Fortifier according to any of the preceding claims, wherein the human component is enriched with respect to the product as originally and naturally derived from the mammary secretion in at least one of its aqueous and/or nonaqueous natural constituents.

6. Fortifier according to claim 5, wherein these constituents are selected from the following group or combinations thereof: proteins; fats; carbohydrates; vitamins; minerals; hormones; cells; in particular calcium, phosphorus, sIgA, lactoferrin, alpha-lactalbimin, beta casein, kappa casein, c3 complement, c4 complement, zinc, sodium, chloride, fatty acids, oligosaccharides, serum albumin, lactose and/or lysozyme.

7. Fortifier according to any of the claims 5 or 6, wherein at least one of the constituents is an immunologically active component.

8. Fortifier according to any of the preceding claims, wherein it is an extract directly or indirectly derived from human mammary secretion.

9. Fortifier according to any of the preceding claims, wherein the human component is at least partially, preferably fully heat treated, pasteurised and/or sterilised.

10. Fortifier according to any of the preceding claims, wherein it additionally comprises at least one nonhuman-derived component.

11. Fortifier according to claim 10, wherein the nonhuman-derived component is selected from the following group, or combinations thereof: proteins; fats; carbohydrates; vitamins; minerals; hormones; cells; stabilizer; emulsifier; in particular calcium, phosphorus, sIgA, casein, lactoferrin, alpha-lactalbimin, beta casein, kappa casein, c3 complement, c4 complement, zinc, sodium, chloride, fatty acids, oligosaccharides, serum albumin, lactose and/or lysozyme.

12. Fortifier according to any of claims 10 or 11, wherein the nonhuman component is a nonhuman, preferably bovine, milk or milk extract.

13. Fortifier according to any of the preceding claims, wherein the human component is based on mammary secretion during lactating periods, and wherein it has been isolated from said mammary secretion during particular stages of mammary secretion such as: after beginning of individual feeding; versus end of individual feeding; lactation phase.

14. Milk sample supplied with a fortifier according to any of the preceding claims.

15. Milk sample according to claim 14, wherein the milk is human milk.

16. Human milk sample according to claim 15, wherein the sample has been fortified with a fortifier which has been directly or indirectly derived from human mammary secretion from the same individual as the human milk which is fortified.

17. Milk sample according to claim 14, wherein the fortified milk is based on nonhuman, preferably bovine milk.

18. A method of providing supplemental nutrients to infants comprising adding a fortifier according to any of the claims 1 to 13 to liquid milk and administering such fortified milk to an infant.

19. A method according to claim 18, wherein the fortified milk is based on human milk, preferably based milk from the same individual as the one having served for the preparation of the fortifier.

20. A method according to claim 18, wherein the fortified milk is based on nonhuman milk, preferably bovine milk or based on a commercial infant milk formula.

21. A method according to any of claims 18 to 20, wherein the fortified milk is administered to a premature, low-birth-weight infant.

22. A method according to one of claims 18 to 21, wherein the fortifier is added in amounts between 0 - 200 mg per ml milk.

23. A method for the production of a fortifier according to any of the claims 1 to 13, wherein a product directly or indirectly derived from mammary secretion during non-pregnant, pregnant, lactating and/or involuting periods is at least partially separated in individual or aqueous and/or nonaqueous components or groups of aqueous and/or nonaqueous components.

24. A method according to claim 23, wherein separation of substantially nonaqueous components is carried out either prior to or after the removal of the aqueous part of the mammary secretion.

25. A method according to any of the claims 23 or 24, wherein there is included at least one heat treatment, pasteurisation and/or sterilisation step.

26. A method according to any of the claims 23 to 25, wherein the separation uses methods like freeze drying, centrifugation, chelation, membrane separation, filtration, in particular component specific filtration, ultrafiltration, reverse osmosis, affinity column separation, dialysis, or combinations thereof.

27. A method of providing supplemental nutrients or supplemental immunologically active components to an adult, comprising administering a fortifier according to any of the claims 1 to 13 in dried or liquid form.
